# EUROPEAN PATENT APPLICATION

(11) **EP 2 135 702 A1**
(43) Date of publication of application: **23.12.2009**
(21) Application number: 08738881.5
(22) Date of filing: 26.03.2008
(51) Int. Cl.: B23K 26/00, B23K 31/00, C21D 1/30, C21D 9/08, C21D 9/50

(54) **RESIDUAL STRESS IMPROVING DEVICE OF TUBULAR BODY**

(30) Priority: 30.03.2007 JP 2007090409
(71) Applicant: Mitsubishi Heavy Industries, Ltd., Tokyo 108-8215 (JP)
(72) Inventor: TSUBOTA, Shuho, Takasago-shi Hyogo 6768686 (JP); ISHIDE, Takashi, Takasago-shi Hyogo 676-8686 (JP); AKABA, Takashi, Kobe-shi Hyogo 652-8585 (JP); ONITSUKA, Hironori, Kobe-shi Hyogo 652-8585 (JP)
(74) Representative: HOFFMANN EITLE
(86) International application number: PCT/JP2008/055657
(87) International publication number: WO 2008/120622

(57) **Abstract**

An aim is to provide a tubular-body residual-stress improving apparatus capable of reducing irradiation on unnecessary areas by controlling the optical paths of laser beams. In the tubular-body residual-stress improving apparatus, an optical control unit (5C) includes one pair of mirrors (21, 22) being disposed at a final stage of an optical system for a plurality of laser beams (P1-Pn) to be sharable and disposed in such a way that the mirrors are placed respectively at both sides, in the circumferential direction of the tubular body (2), of a final optical path of the laser beams to the tubular body (2), and another pair of mirrors (23, 24) being disposed at final stage of the optical system for the laser beams at both ends and disposed in such a way that the mirrors are placed respectively at both sides, in an axial direction of the tubular body (2), of final optical paths of the laser beams at both ends to the tubular body (2). Two pairs of mirrors (21-24) reflect inwards a skirting portion of the corresponding laser beam in the circumferential and axial direction of the tubular body (2) so as to irradiate the tubular body (2) with the laser beams.

## Description

### Technical Field

The present invention relates to a tubular-body residual-stress improving apparatus for improving a residual stress in a tubular body such as a pipe.

### Background Art

Installation of a tubular body, such as a large pipe, in such facilities as nuclear power plants and large-scale plants has a problem of removing a stress remaining in the pipe after welding. Welding causes a residual stress in a pipe, and the residual stress may possibly shorten the life of the pipe. For this reason, it is desirable that such residual stress caused by welding be removed.

The inventors of the present application have proposed a method for improving the residual stress that remains in a pipe. The outer circumferential surface of a pipe is irradiated with laser light emitted from a laser that is circling around the pipe. The pipe is thus rapidly heated up to a temperature that will not negatively affect the material of the pipe. The heating causes a temperature difference between the inner surface and the outer surface of the pipe, and thus contributes to the reduction in the residual stress in the pipe (see Patent Documents 1 to 4).
Patent Document 1: JP-A-2006-035292
Patent Document 2: JP-A-2006-015399
Patent Document 3: JP-A-2006-037199
Patent Document 4: JP-A-2005-232586

### Disclosure of the Invention

### Problems to be Solved by the Invention

The use of laser irradiation in the method for reducing the residual stress in the pipe--such as ones disclosed in Patent Documents 1 to 4--causes a variety of problems. Firstly, if a pipe with a relatively small diameter is irradiated with laser light, more light misdirected toward the surrounding area of the pipe in the circumferential direction thereof. Consequently, the leakage of light increases, and it is difficult to obtain sufficient light intensity for the end portions of irradiation area. Secondly, also in the axial direction of the pipe, laser-light is applied onto areas outside an area where laser-light irradiation is needed. Accordingly, an extra laser output is needed to obtain desired heat-input characteristics within a desired area. Thirdly, if the target of laser irradiation is a tapered pipe with a varying diameter, the distribution of heat input changes drastically in the boundary area between the tapered portion and the straight portion of the pipe. It is therefore difficult to obtain a desired distribution of heat input across the tapered portion and the straight portion of the pipe.

The present invention made in view of the problems described above aims to provide a tubular-body residual-stress improving apparatus capable of reducing irradiation on unnecessary areas by controlling the optical paths of laser light.

### Means for Solving the Problems

A first aspect of the invention for solving the above problems provides a tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes one pair or a plurality of pairs of mirrors, each pair of mirrors being disposed at a final stage of an optical system for the corresponding laser beam and disposed in such a way that the mirrors of the pair are placed respectively at both sides, in the circumferential direction of the tubular body, of a final optical path of the corresponding laser beam to the tubular body, and
the optical control unit makes the one pair or each of the plurality of pairs of mirrors reflect inwards a skirting portion, in the circumferential direction of the tubular body, of the corresponding laser beam so as to irradiate the tubular body with the laser beam thus reflected.

A second aspect of the invention for solving the above problems provides the tubular-body residual-stress improving apparatus according to the first aspect, wherein, if the plurality of laser beams emitted from the laser light source are used for the irradiation, a pair of mirrors sharable by the plurality of laser beams are provided in place of the plurality of pairs of mirrors.

A third aspect of the invention for solving the above problems provides a tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes one pair of mirrors which are disposed at final stages of optical systems for the laser beams at both ends and disposed in such a way that the mirrors are placed respectively at both sides, in an axial direction of the tubular body, of final optical paths of the laser beams at both ends to the tubular body, and
the optical control unit makes the one pair of mirrors reflect inwards a skirting portion, in the axial direction of the tubular body, of the corresponding laser beam so as to irradiate the tubular body with the laser beam thus reflected.

A fourth aspect of the invention for solving the above problems provides the tubular-body residual-stress improving apparatus according to any one of the first and second aspects, wherein
the optical control unit further includes one different pair of mirrors which are disposed at the final stages of the optical systems for the laser beams at both ends and disposed in such a way that the mirrors are placed respectively at both sides, in an axial direction of the tubular body, of final optical paths of the laser beams at both ends to the tubular body, and
the optical control unit makes the one different pair of mirrors reflect inwards a skirting portion, in the axial direction of the tubular body, of the corresponding laser beam so as to irradiate the tubular body with the laser beam thus reflected.

A fifth aspect of the invention for solving the above problems provides the tubular-body residual-stress improving apparatus according to the fourth aspect, wherein, for the final optical path of each laser beam to the tubular body, the one pair of mirrors and the one different pair of mirrors are disposed to form a box shape that surrounds the final optical paths.

A sixth aspect of the invention for solving the above problems provides a tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a trapezoidal prism disposed in an optical system for each laser beam, the trapezoidal prism being placed with its trapezoidal side surfaces facing in an axial direction of the tubular body, and
the optical control unit makes the trapezoidal prism refract inwards a skirting portion, in the circumferential direction of the tubular body, of the corresponding laser beam so as to irradiate the tubular body with the laser beam thus refracted.

A seventh aspect of the invention for solving the above problems provides the tubular-body residual-stress improving apparatus according to the sixth aspect, wherein
the optical control unit includes a different trapezoidal prism disposed in the optical system for the laser beam at at least one end, the different trapezoidal prism being placed with its trapezoidal sides surfaces facing in the circumferential direction of the tubular body, and
the optical control unit makes the different trapezoidal prism refract inwards a skirting portion, in the axial direction of the tubular body, of the laser beam at the one end so as to irradiate the tubular body with the laser beam thus refracted.

An eighth aspect of the invention for solving the above problems provides the tubular-body residual-stress improving apparatus according to any one of the sixth and seventh aspects, wherein
the optical control unit includes a lens in the optical system for the laser beam at at least one end, the lens shifting an optical axis of the laser beam in the optical system, and
the optical control unit makes the lens shift the optical axis of the laser beam at the one end so as to shift a position of intensity peak of the laser beam at the one end towards an outer side in the axial direction of the tubular body, so that the tubular body is irradiated with the laser beam with the optical axis thus shifted.

A ninth aspect of the invention for solving the above problems provides the tubular-body residual-stress improving apparatus according to any one of the sixth to eighth aspects, wherein a polyhedral prism having more than three surfaces on the light-outgoing side of the prism is provided in place of each of the aforementioned trapezoidal prisms and of the aforementioned different trapezoidal prisms.

A tenth aspect of the invention for solving the above problems provides the tubular-body residual-stress improving apparatus according to the seventh aspect, wherein
a hexahedral prism that has a truncated quadrangular pyramid shape is provided in place of each different trapezoidal prism, and
the hexahedral prism refracts inwards the skirting portion, in the circumferential direction of the tubular body, of the laser beam at each end and refracts inwards the skirting portion, in the axial direction of the tubular body, of the laser beam at each end so as to irradiate the tubular body with the laser beam thus refracted.

An eleventh aspect of the invention for solving the above problems provides a tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a different trapezoidal prism disposed in an optical system for the laser beam at at least one end, the different trapezoidal prism being placed with its trapezoidal side surfaces facing in the circumferential direction of the tubular body, and
the optical control unit makes the different trapezoidal prism refract inwards a skirting portion, in an axial direction of the tubular body, of the laser beam at the one end so as to irradiate the tubular body with the laser beam thus refracted.

A twelfth aspect of the invention for solving the above problems provides a tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a lens in an optical system for the laser beam at at least one end, the lens shifting an optical axis of the laser beam, and
the optical control unit makes the lens shift the optical axis of the laser beam at the one end so as to shift the position of intensity peak of the laser beam at the one end towards an outer side in an axial direction of the tubular body, so that the tubular body is irradiated with the laser beam with the optical axis thus shifted.

A thirteenth aspect of the invention for solving the above problems provides the tubular-body residual-stress improving apparatus according to any one of the sixth to twelfth aspects, wherein the optical system of the laser beam is arranged inside a single casing..

A fourteenth aspect of the invention for solving the above problems provides a tubular-body residual-stress improving apparatus comprising:
rotationally driving means that moves circling around and outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with and the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a light pipe at an early stage of an optical system for each laser beam, the light pipe having a rectangular cross section or a square cross section, and
the optical control unit makes the light pipe form the laser beam into a rectangular irradiation shape or a square irradiation shape, and irradiates the tubular body with the laser beam thus formed into the shape.

A fifteenth aspect of the invention for solving the above problems provides the tubular-body residual-stress improving apparatus according to the fourteenth aspect, wherein the light pipe with the rectangular cross section or the square cross section is replaced with a light pipe with a trapezoidal cross section.

A sixteenth aspect of the invention for solving the above problems provides the tubular-body residual-stress improving apparatus according to the fourteenth aspect, wherein the light pipe with the rectangular cross section or the square cross section is replaced with a light pipe with a circular cross section or an elliptical cross section.

A seventeenth aspect of the invention for solving the above problems provides the tubular-body residual-stress improving apparatus according to any one of the fourteenth to sixteenth aspects, wherein the length of each light pipe is changed in accordance with the optical system thereof.

An eighteenth aspect of the invention for solving the above problems provides the tubular-body residual-stress improving apparatus according to any one of the fourteenth to sixteenth aspects, wherein a variable-length light pipe is provided as each of the light pipes, the variable-length light pipe being capable of changing its length in accordance with the optical system thereof.

A nineteenth aspect of the invention for solving the above problems provides the tubular-body residual-stress improving apparatus according to any one of the fourteenth to eighteenth aspects, wherein each light pipe has such a length that a change in a characteristic of an incoming laser beam causes no change in a characteristic of the outgoing laser beam.

A twentieth aspect of the invention for solving the above problems provides the tubular-body residual-stress improving apparatus according to any one of the first to nineteenth aspects, wherein an aspheric lens is provided in the optical system of the optical control unit.

### Effects of the Invention

According to the first to fourth aspects of the invention, the mirrors are used to reflect inwards the light of the skirting portions of the laser beams. Accordingly, sufficient irradiation intensity can be secured in the end portions of the irradiation area. In addition, irradiation of unnecessary area with the laser beams is reduced so that the wasting of the laser-beam output can be reduced.

According to the sixth to eleventh aspects of the invention, the prisms are used to refract inwards the light of the skirting portions of the laser beams. Accordingly, sufficient irradiation intensity can be secured in the end portions of the irradiation area. In addition, irradiation of unnecessary area with the laser beams is reduced so that the wasting of the laser-beam output can be reduced.

According to the eighth and twelfth aspects of the invention, the axis-shifting lens is used to shift the optical axis of each laser beam so that the peak position of the laser beam on the irradiation surface is shifted outwards in the axial direction. Accordingly, sufficient irradiation intensity can be secured in the end portions, in the axial direction, of the irradiation area. In addition, irradiation of unnecessary area with the laser beams is reduced so that the wasting of the laser-beam output can be reduced.

According to the fifth and thirteenth aspects of the invention, the plural optical systems are arranged in the single casing. Accordingly, a wider adjustment range for each optical system can be accomplished. In addition, leakage of light can be reduced, which in turn prevents the leaked light from damaging the apparatus or from causing a disaster.

According to the fourteenth to nineteenth aspects of the invention, the light pipes are used to form the proper irradiation shapes of the laser beams. Thus, uniform and sufficient irradiation intensity can be obtained over the entire irradiation area. In addition, irradiation of unnecessary area with the laser beams is reduced so that the wasting of the laser-beam output can be reduced. As a result, leakage of light can be reduced, which in turn prevents the leaked light from damaging the apparatus or from causing a disaster. Moreover, a desired irradiation profile can be formed even for a tubular body having a tapered portion.

According to the twentieth aspect of the invention, the aspheric lens is provided in the optical system. Accordingly, the number of lenses to be used can be reduced so that a small and simple configuration of the optical control unit can be obtained. In addition, by forming the aspheric lens appropriately for the shape of the irradiation target, a desired irradiation profile can be formed.

### Brief Description of the Drawings

[Fig. 1] Fig. 1 is a schematic diagram illustrating an example of the configuration of a tubular-body residual-stress improving apparatus according to an embodiment of the present invention.
[Fig. 2] Fig. 2(a) is a schematic diagram illustrating an example of the configuration of an optical control unit of the tubular-body residual-stress improving apparatus according to an embodiment (Embodiment 1) of the present invention. Fig. 2(b) is a graph describing the effect of the optical control unit.
[Fig. 3] Fig. 3(a) is a schematic diagram illustrating an example of the configuration of an optical control unit of the tubular-body residual-stress improving apparatus according to another embodiment (Embodiment 2) of the present invention. Fig. 3(b) is a graph describing the effect of the optical control unit.
[Fig. 4] Fig. 4 is a schematic diagram illustrating an example of the configuration of an optical control unit of the tubular-body residual-stress improving apparatus according to another embodiment (Embodiment 3) of the present invention.
[Fig. 5] Fig. 5 is a schematic diagram illustrating an example of the configuration of an optical control unit of the tubular-body residual-stress improving apparatus according to another embodiment (Embodiment 4) of the present invention.
[Fig. 6] Fig. 6(a) is a schematic diagram illustrating an example of the configuration of an optical control unit of the tubular-body residual-stress improving apparatus according to another embodiment (Embodiment 5) of the present invention. Fig. 6(b) is a graph describing the effect of the optical control unit.
[Fig. 7] Fig. 7(a) and 7(b) are schematic diagrams each illustrating an example of the configuration of an optical control unit of the tubular-body residual-stress improving apparatus according to another embodiment (Embodiment 6) of the present invention. Fig. 7(a) is a top view and Fig. 7(b) is a perspective view.
[Fig. 8] Fig. 8 is a graph describing the effect of the optical control unit shown in Fig. 7.
[Fig. 9] Fig. 9 is a perspective view illustrating an example of a polyhedral prism used in the optical control unit of the tubular-body residual-stress improving apparatus of the present invention.
[Fig. 10] Fig. 10 is a perspective view illustrating an example of a hexahedral prism used in the optical control unit of the tubular-body residual-stress improving apparatus of the present invention.
[Fig. 11] Fig. 10 is a schematic diagram illustrating an example of the configuration of an optical control unit of the tubular-body residual-stress improving apparatus according to another embodiment (Embodiment 10) of the present invention.
[Fig. 12] Figs. 12(a) and 12(b) are graphs each describing the effect of the optical control unit shown in Fig. 11.
[Fig. 13] Fig. 13 is a schematic diagram illustrating a modified example of the optical control unit of the tubular-body residual-stress improving apparatus of the present invention shown in Fig. 11.
[Fig. 14] Figs. 14(a) and 14(b) are graphs each describing the effect of the optical control unit shown in Fig. 13.

### Explanation of Reference Numerals

1: residual-stress improving apparatus
2: pipe
3: rotationally driving apparatus
4: arm portion
5: optical control unit
6: optical fiber
7: laser oscillator
8: control unit
9: laser beam
21, 22, 23, 24: mirror
32, 37: trapezoidal prism
43: axis-shifting lens
48: polyhedral prism
49: hexahedral prism
51: light pipe

### Best Modes for Carrying Out the Invention

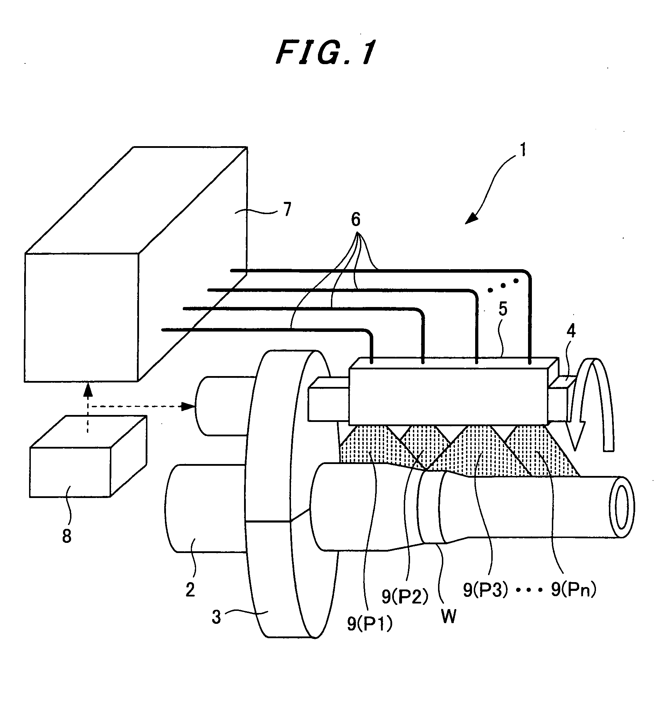

With reference to Figs. 1 to 14, detailed descriptions will be given as to a tubular-body residual-stress improving apparatus according to the present invention.

### Embodiment 1

Fig. 1 is a schematic diagram illustrating the configuration of a tubular-body residual-stress improving apparatus according to the present invention.
Fig. 1 shows that a residual-stress improving apparatus 1 includes a rotationally driving apparatus 3 (rotationally driving means), an arm portion 4, an optical control unit 5, a laser oscillator 7, and a control unit 8. The rotationally driving apparatus 3 is disposed so as to be capable of moving circling around the outer circumference of a pipe 2, which is a cylindrical tubular body. The rotationally driving apparatus 3 moves at a controllable moving speed in the circumferential direction of the pipe 2. The arm portion 4 is held by the rotationally driving apparatus 3, extends along the axial direction of the pipe 2, and is capable of circling concentrically with and around the pipe 2. The optical control unit 5 is held by the arm portion 4, and irradiates a predetermined area of the outer-circumferential surface of a welded portion W of the pipe 2 with plural laser beams 9. The laser oscillator 7 is connected to the optical control unit 5 by means of multiple optical fibers 6, and supplies laser beams to the optical control unit 5 through the optical fibers 6. The control unit 8 controls the rotationally driving apparatus 3, the laser oscillator 7, and the like.

The rotationally driving apparatus 3 is detachably attached to the outer circumference of the pipe 2. The rotationally driving apparatus 3 can be placed freely at any position where the residual stress needs to be improved such for example as at a position located around a welded portion W. Note that the rotationally driving apparatus 3 may have any configuration as long as the rotationally driving apparatus 3 holds the pipe 2 on its inner-circumference side and has a rotatable outer-circumference side where the arm portion 4 is held. For example, a possible configuration may have a fixed portion located on its inner-circumference side and a circling portion on its outer-circumference side. The fixing portion holds the pipe 2. The circling portion holds the arm portion 4 and circles concentrically with and around the pipe 2.

The optical control unit 5, the optical fibers 6, and the laser oscillator 7 together form a heating optical system. The optical control unit 5 disposed on the arm portion 4 along the axial direction of the pipe 2 irradiates a predetermined area of the outer-circumferential surface of the pipe 2 with the plural laser beams 9 so that the predetermined area can be heated uniformly. The optical control unit 5 adjusts a desired heating area by adjusting the positions of its components such as lenses and mirrors so as to change the irradiation width in the circumferential direction and the irradiation length in the axial direction. A detail description of this adjustment will be given later. Here, as an example, the plural optical fibers 6 are provided and the plural laser beams 9 are denoted respectively by P1 to Pn to correspond respectively to the optical fibers 6. However, the number of the optical fibers 6 and that of the laser beams 9 can be changed appropriately depending on the irradiation conditions as long as at least one laser beam 9 can be emitted.

A residual stress can be improved by the residual-stress improving apparatus 1 according to the present invention in the following way. Firstly, the heating area is adjusted in advance by adjusting the optical control unit 5. Then, the control unit 8 controls the output of the laser oscillator 7, and also causes the rotationally driving apparatus 3 to move circling while controlling the moving speed thereof at a predetermined moving speed. Circling around the outer circumference of the pipe 2, the optical control unit 5 irradiates a predetermined area of the outer-circumferential surface of the pipe 2 with laser beams 9. Thus, the predetermined area of the outer-circumferential surface of the pipe 2 is heated. By using a temperature difference between the inner surface and the outer surface of the pipe 2 that is caused by this heating, the inner surface of pipe 2 is brought into a tensile-yield state. As a consequence, when the pipe 2 is cooled down, the residual stress in the inner surface thereof is reduced or improved so as to be turned to a compressive stress. The optical control unit 5 may circle once or alternatively plural times. If the optical control unit 5 circles plural times, the circling may be finished at a position that is different from the starting position. In addition, the heating temperature is preferably below the solution heat-treatment temperature. Moreover, forcible cooling of the inner-surface side of the pipe 2 is not an essential part of the present invention.

First of all, a brief description will be given as to the principle of the residual-stress improvement by use of the tubular-body residual-stress improving apparatus of the present invention.

When the residual stress of a predetermined area in the vicinity of the welded portion W of the pipe 2 is improved according to the present invention, the outer-circumferential surface of the pipe 2 is heated with the laser beams so as to cause a predetermined temperature difference between the outer surface and the inner surface of the pipe 2. Performing this heating turns the outer surface to a state of a compressive stress, and turns the inner surface to a state of a tensile stress and further to a state of tensile yield. Once the heating has been finished, the temperature difference between the inner surface and the outer surface of the predetermined area disappears, and the temperature of these surfaces is lowered down approximately to the room temperature. Then, the outer surface is turned to a state of a tensile stress, and the inner surface is turned to a state of a compressive stress. The yield stress allows the residual stress of the inner surface to be improved from the tensile-stress state to the compressive-stress state. The conditions under which the laser heating is performed is preferably set so that the magnitude of the stress (amount of strain) to be produced at the time of heating is at least equal to or larger than the amount of strain equivalent to the yield stress. In this way, the residual stress generated in the inner surface of the pipe 2 can be improved from the tensile state to the compressive state. As a consequence, stress corrosion cracking can be prevented from occurring in the inner surface of the tubular body.

In order to obtain a desired amount of strain by heating, with laser, the outer-circumferential surface of the pipe 2 (the vicinity of the welded portion W), it is necessary to control the irradiation length in the axial direction and the irradiation width in the circumferential direction within their respective proper ranges. Each of the irradiation length in the axial direction and the irradiation width in the circumferential direction varies depending upon such factors as the shape of the pipe 2 (specifically, the diameter and the wall thickness of the pipe 2), the material of the pipe 2, and the installation environment of the pipe 2. Accordingly, it is necessary to appropriately set the irradiation length in the axial direction and the irradiation width in the circumferential direction based on such conditions.

The use of the optical fibers 6 to supply laser beams to the optical control unit 5 makes the irradiation area of each laser beams smaller than otherwise. So, expanding the irradiation area by means, for example, of a lens or a concave mirror is needed to obtain a desired irradiation length in the axial direction and a desired irradiation width in the circumferential direction. The expanding of the irradiation area in the above-mentioned way makes it difficult to secure sufficient light intensity for the end portions of the irradiation area. Such end portions cannot serve as irradiation areas for the heat input, thus being wasted irradiation areas. A larger laser output is therefore needed to obtain a desired heat input into the end portions of the irradiation length in the axial direction and into the end portions of the irradiation width in the circumferential direction. In addition, if a pipe with a relatively small diameter is irradiated with laser light, the light advancing towards the end portions, in the circumferential direction, of the irradiation area misses the pipe 2. Consequently, the leakage of light increases, and it is difficult to secure sufficient light intensity for the end portions, in the circumferential direction, of the irradiation area of the pipe 2 actually irradiated with the laser light.

The optical control unit 5 of the tubular-body residual-stress improving apparatus of the present invention has one of a variety of optical systems specially designed to address the above-mentioned problems. Note that, the circumferential direction and the axial direction in the descriptions given below mean the circumferential direction of the pipe 2 and the axial direction of the pipe 2, respectively, unless otherwise mentioned.

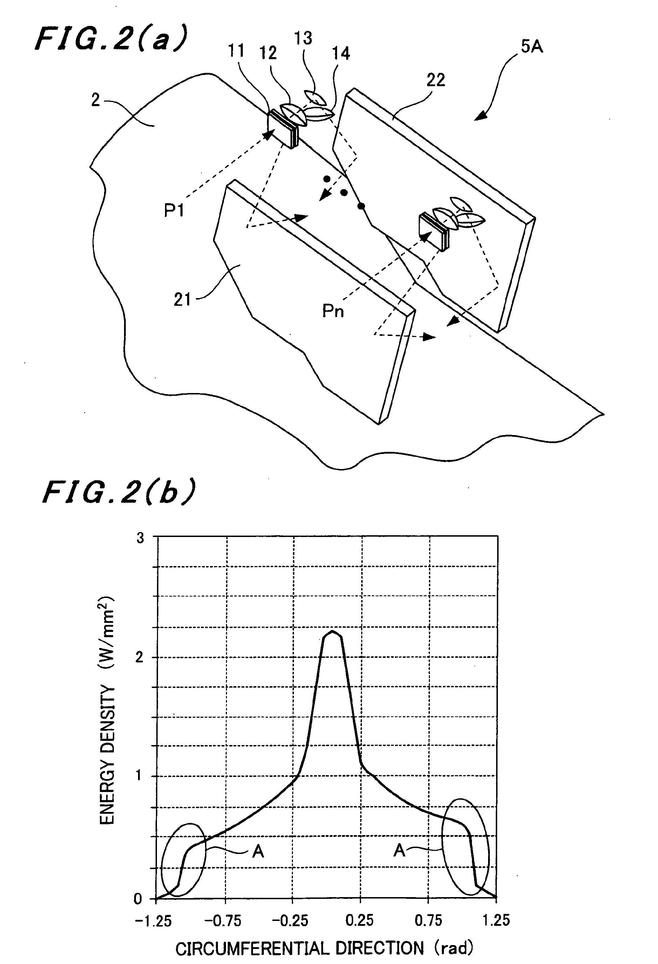

Fig. 2 (a) is a schematic diagram illustrating an example of the configuration of the optical control unit 5 according to an embodiment. A description of this configuration will be given below. To make Fig. 2(a) more understandable, Fig. 2(a) shows only the optical systems for the laser beams P1 and Pn of all the plural laser beams. In addition, though each of the optical paths for the laser beams P1 and Pn is actually enlarged and reflected by use of lenses and mirrors, Fig. 2(a) shows only the optical paths that are characteristic of Embodiment 1.

An optical control unit 5A of Embodiment 1 controls the laser beams P1 to Pn. The optical systems provided respectively on the optical paths of the laser beams P1 to Pn have their configurations identical to one another. As Fig. 2(a) shows, the optical system, for example, for the laser beam P1 includes a protective glass 11, a lens 12, a mirror 13, and a lens 14. These members are arranged in this order along the direction in which the laser beam P1 advances. The laser beam P1 emitted from the optical fiber 6 enters the protective glass 11 that protects the optical system. The laser beam that has passed through the protective glass 11 is enlarged by the lens 12. Then, the laser beam thus enlarged by the lens 12 is reflected by the mirror 13 towards the pipe 2. The laser beam thus reflected by the mirror 13 is further enlarged by the lens 14 before a desired area of the pipe 2 is irradiated with the laser beam.

Only such optical system provides the end portions, in the circumferential direction, of the irradiation area with insufficient light intensity. To address this, the optical control unit 5A of Embodiment 1 is equipped with a pair of mirrors 21 and 22. The pair of mirrors 21 and 22 are disposed at the final stages of the optical systems for the laser beams P1 to Pn. The mirror 21 and the mirror 22 are placed respectively at both sides, in the circumferential direction, of the final optical paths of the optical systems for the laser beams that the pipe 2 is irradiated with. The positions where the mirrors 21 and 22 are placed allow the skirting portions, in the circumferential direction, of the enlarged laser beam to be reflected thereon and thus to be guided to the desired irradiation area of the pipe 2.

With this configuration, the end portions, in the circumferential direction, of the irradiation area of the pipe 2 is irradiated with laser beams that overlap each other: the laser beam that passes through the lens 14 and then reaches directly the pipe 2; and the laser beam that passes through the lens 14 and then is reflected by the mirrors 21 and 22 before it reaches the pipe 2. Accordingly, the misdirected light can be reduced, and the reduction contributes to an effective use of the output. The light intensity in the end portions, in the circumferential direction, of the irradiation area of the pipe 2 is thus controlled so that a steep rise of the light intensity can be obtained. Note that only a single pair of mirrors 21 and 22 which can be shared by all the optical systems for the laser beams P1 to Pn are provided herein in consideration of easy adjustment of the mirrors 21 and 22. Nevertheless, this sharable single pair of mirrors 21 and 22 may be replaced with mirrors that are provided individually for the laser beams P1 to Pn.

With a conventional configuration, a part of light is misdirected toward an outer side of the pipe 2, and the skirting portions of each laser beam hardly contribute to the heat input into the necessary area. With the above-described configuration of Embodiment 1, however, the misdirected part of light and the skirting portions of the laser beam can be used effectively by means of the mirrors 21 and 22 to secure sufficient light intensity in the end portions, in the circumferential direction, of the irradiation area of the pipe 2. The light intensity can be thus controlled so as to obtain a profile with a steeply rising portions, such as ones shown in areas A of Fig. 2(b), in both end portions in the circumferential direction.

### Embodiment 2

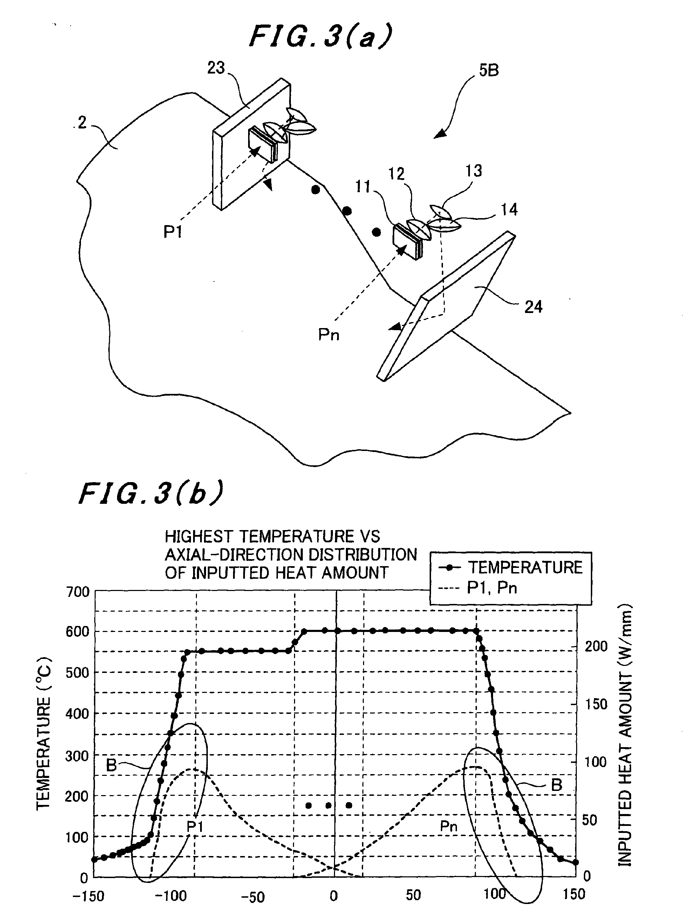

Fig. 3(a) is a schematic diagram illustrating an example of the configuration of the optical control unit 5 according to another embodiment. A description of this configuration will be given below. To make Fig. 3(a) more understandable, Fig. 3(a) also shows only the optical systems for the laser beams P1 and Pn of all the optical systems for the laser beams P1 to Pn. In addition, though each of the optical paths for the laser beams P1 and Pn is actually enlarged and reflected by use of lenses and mirrors, Fig. 3(a) shows only the optical paths that are characteristic of Embodiment 2.

Fig. 3(a) shows an optical control unit 5B which has a same configuration as that of the optical control unit 5A of Embodiment 1 shown in Fig. 2(a) except for the configuration of mirrors. For this reason, the descriptions of the optical control unit 5B will be given without the duplicate descriptions for the same members as those of the optical control unit 5A of Embodiment 1.

To secure sufficient light intensity in the end portions, in the axial direction, of the irradiation area, the optical control unit 5B of Embodiment 2 is equipped with a pair of mirrors 23 and 24. The pair of mirrors 23 and 24 are placed respectively at both end portions of the laser beams P1 to Pn that the pipe 2 is irradiated with. To put it differently, the pair of mirrors 23 and 24 are placed at the final stages of the optical systems for the laser beams P1 and Pn. The mirrors 23 and 24 are placed respectively at the both end sides, in the axial direction, of the final optical paths of the optical systems for the laser beams P1 and Pn. The position where the mirror 23 is placed allows the skirting portions, in the axial direction, of the enlarged laser beam P1 to be reflected thereon and thus to guided to the desired irradiation area of the pipe 2. The position where the mirror 24 is placed allows the skirting portions, in the axial direction, of the enlarged laser beam Pn to be reflected thereon and thus to be guided to the desired irradiation area of the pipe 2. Note that, if the pipe 2 is irradiated with only a single stream of laser beam, the pair of mirrors 23 and 24 can be disposed in the following way. If the laser beam P1 is the only laser beam that the pipe 2 is irradiated with, the pair of mirrors 23 and 24 are placed at the final stage of the optical system for the laser beam P1. The mirror 23 and the mirror 24 are placed respectively at the both end sides, in the axial direction, of the final optical path of the optical system for the laser beam P1.

With this configuration, the end portions, in the axial direction, of the irradiation area of the pipe 2 is irradiated with laser beams that overlap each other: the laser beam that passes through the lens 14 and then directly reaches the pipe 2; and the laser beam that passes through the lens 14 and then is reflected by the corresponding one of the mirrors 23 and 24 before it reaches the pipe 2. Accordingly, the irradiation of unnecessary areas can be reduced, and the reduction contributes to an effective use of the output. The light intensity in the end portions, in the axial direction, of the irradiation area of the pipe 2 is thus controlled so that a steep rise of the light intensity can be accomplished.

With a conventional configuration, the skirting portions of each laser beam hardly contribute to the heat input into the necessary area. With the above-described configuration of Embodiment 2, however, the skirting portions of the laser beam can be used effectively by means of the mirrors 23 and 24 to secure sufficient light intensity in the end portions, in the axial direction, of the irradiation area of the pipe 2. Without the mirrors 23 and 24, the profiles for the laser beams P1 and Pn shown in Fig. 3(b) would conventionally be, for example, ones of Gaussian distribution. The providing of the mirrors 23 and 24 allows the heat input to be controlled so as to obtain profiles each with a steeply rising portions, such as ones shown in areas B of Fig. 3(b), in the both end portions in the axial direction. In addition, the distribution of the temperature in the pipe 2 can be controlled so as to obtain a temperature profile as shown in Fig. 3(b). Note that Fig. 3(b) shows only the profiles for the laser beams P1 and Pn while the other profiles, such as one for the laser beam P2, are omitted.

### Embodiment 3

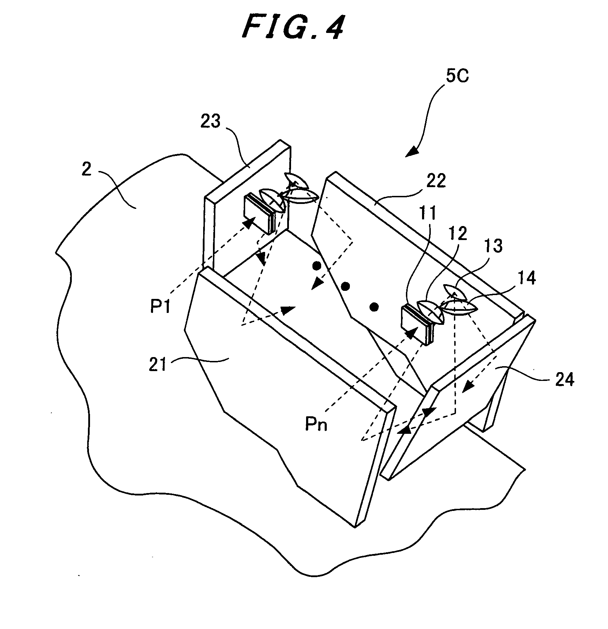

Fig. 4 is a schematic diagram illustrating an example of the configuration of the optical control unit 5 according to another embodiment. A description of this configuration will be given below. To make Fig. 4 more understandable, Fig. 4 also shows only the optical systems for the laser beams P1 and Pn of all the optical systems for the laser beams P1 to Pn. In addition, though each of the optical paths for the laser beams P1 and Pn is actually expanded and reflected by use of lenses and mirrors, Fig. 4 shows only the optical paths that are characteristic of Embodiment 3.

Fig. 4 shows an optical control unit 5C which has a same configuration as that of the optical control unit 5A of Embodiment 1 shown in Fig. 2(a) and that of the optical control unit 5B of Embodiment 2 shown in Fig. 3(a) except for the configuration of mirrors. More specifically, the optical control unit 5C shown in Fig. 4 includes a combination of the mirrors 21 and 22 of the optical control unit 5A and the mirrors 23 and 24 of the optical control unit 5B. The mirrors 21 to 24 form a shape of box surrounding the optical systems for the laser beams P1 to Pn. For this reason, the descriptions for the configuration of the optical control unit 5C will be given without the duplicate descriptions for the same members as those of the optical control unit 5A of Embodiment 1 and those of the optical control unit 5B of Embodiment 2.

To obtain sufficient light intensity in the end portions, both in the circumferential direction and in the axial direction, of the irradiation area, the optical control unit 5C of Embodiment 3 is equipped with mirrors 21 and 22 as well as mirrors 23 and 24. The mirrors 21 and 22 as well as 23 and 24 are placed at the final stages of the optical systems. The mirrors 21 and 22 are placed respectively at both sides, in the circumferential direction, of the final optical paths of the optical systems for the laser beams. The mirrors 23 and 24 are placed respectively at both sides, in the axial direction, of the final optical paths of the optical systems for the laser beams. The positions where the mirrors 21 and 22 are placed allows the skirting portions, in the circumferential direction, of the enlarged laser beams P1 to Pn to be reflected thereon and thus to be guided to the desired irradiation area of the pipe 2. The positions where the mirrors 23 and 24 are placed allows the skirting portions, in the axial direction, of the enlarged laser beams P1 and Pn to be reflected thereon and thus to be guided to the desired irradiation area of the pipe 2.

With this configuration, the end portions, in the circumferential direction, of the irradiation area of the pipe 2 is irradiated with laser beams that overlap each other: the laser beam that passes through the lens 14 and then directly reaches the pipe 2; and the laser beam that passes through the lens 14 and then is reflected by the mirrors 21 and 22 before it reaches the pipe 2. In addition, the end portions, in the axial direction, of the irradiation area of the pipe 2 is irradiated with laser beams that overlap each other: the laser beam that passes through the lens 14 and then directly reaches the pipe 2; and the laser beam that passes through the lens 14 and then is reflected by the corresponding one of the mirrors 23 and 24 before it reaches the pipe 2. Accordingly, both the misdirected light and the irradiation of unnecessary areas can be reduced, and the reduction contributes to an effective use of the output. The light intensity in the end portions, both in the circumferential direction and in the axial direction, of the irradiation area of the pipe 2 is thus controlled so that a steep rise of the light intensity can be obtained.

With a conventional configuration, a part of light is misdirected toward an outer side of the pipe 2, and the skirting portions, in the circumferential direction, of each laser beam hardly contribute to the heat input into the necessary area. With the above-described configuration of Embodiment 3, however, the misdirected part of light and the skirting portions, in the circumferential direction, of the laser beam can be used effectively by means of the mirrors 21 and 22 to secure sufficient light intensity in the end portions, in the circumferential direction, of the irradiation area of the pipe 2. In addition, the skirting portions, in the axial direction, of the laser beam that hardly contribute to the heat input into the necessary area can be used effectively by means of the mirrors 23 and 24 to secure sufficient light intensity in the end portions, in the axial direction, of the irradiation area of the pipe 2. Moreover, the optical systems for the laser beams P1 to Pn are surrounded by the mirrors 21 to 24 arranged in a box shape. Accordingly, the leakage of light out to the surrounding areas can be reduced, so that no countermeasure against the leakage of light (for example, the providing of protector plates) is no longer necessary.

### Embodiment 4

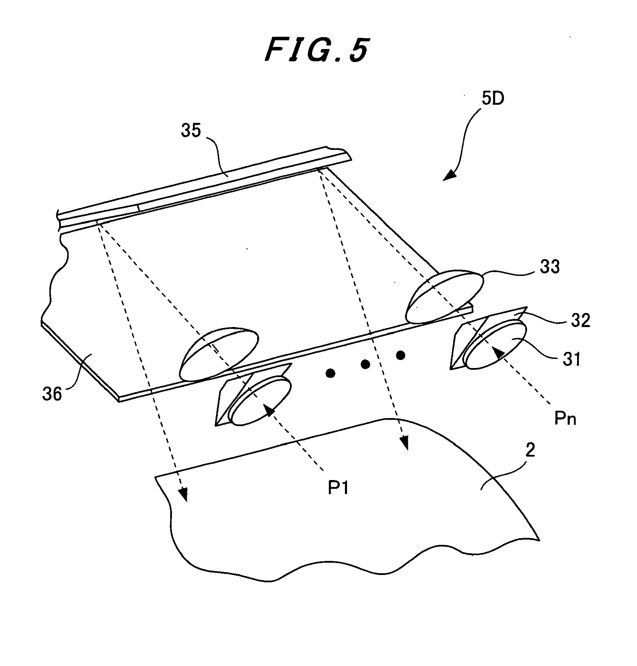

Fig. 5 is a schematic diagram illustrating an example of the configuration of the optical control unit 5 according to another embodiment. A description of this configuration will be given below. To make Fig. 5 more understandable, Fig. 5 also shows only the optical systems for the laser beams P1 and Pn of all the optical systems for the laser beams P1 to Pn. In addition, though each of the optical paths for the laser beams P1 and Pn is actually expanded and reflected by use of lenses and mirrors, Fig. 5 shows only principal optical paths.

As Fig. 5 shows, an optical control unit 5D of Embodiment 4 also controls the laser beams P1 to Pn. The optical systems provided respectively on the optical paths of the laser beams P1 to Pn have their configuration identical to one another. The optical system, for example, for the laser beam Pn includes a protective glass 31, a trapezoidal prism 32, a lens 33, a mirror 35, and a protective glass 36. These members are arranged in this order along the direction in which the laser beam Pn advances. In short, the configuration of the optical control unit 5D includes the trapezoidal prism 32 that is placed somewhere in each optical system, for example, at an early-stage side of the optical system.

Embodiment 4 differs from the above-described Embodiments 1 to 3 in the use of the trapezoidal prisms 32 instead of the mirrors. Each trapezoidal prism 32 is placed with its trapezoidal side-surfaces facing in the axial direction (i.e., extending in parallel to the circumferential direction). The trapezoidal prism 32 causes inward refraction of the optical path for the incident laser beam of the skirting portion in the circumferential direction so as to secure sufficient light intensity in the end portions, in the circumferential direction, of the irradiation area.

The laser beam Pn, for example, emitted from the optical fiber 6 enters the protective glass 31 that protects the optical system. The laser beam that has passed through the protective glass 11 is refracted by the trapezoidal prism 32 that adjusts the optical path for the laser beam of the skirting portion in the circumferential direction. The laser beam thus refracted by the trapezoidal prism 32 is enlarged by the lens 33. The laser beam thus enlarged by the lens 33 is reflected by the mirror 35 towards the pipe 2. The laser beam thus reflected by the mirror 35 passes through the protective glass 36 before a desired area of the pipe 2 is irradiated with the laser beam. Note that a spherical lens is used as the lens 33, but a cylindrical lens or the like may be used instead. In still another possible configuration, a cylindrical lens may be used for circumferential-direction adjustment while a different lens may be used for the axial-direction adjustment.

With a conventional configuration, a part of light is misdirected, and the skirting portions of each laser beam hardly contribute to the heat input into the necessary area. With the above-described configuration of Embodiment 4, however, the misdirected part of light and the skirting portions of the laser beam are refracted, and thus are used for the irradiation of the end portions, in the circumferential direction, of the irradiation area of the pipe 2. Accordingly, the misdirected light can be reduced, and the reduction contributes to an effective use of the output. The light intensity in the end portions, in the circumferential direction, of the irradiation area of the pipe 2 is thus controlled so that a steep rise of the light intensity can be obtained. Note that only the mirror 35 and the protective glass 36 are provided herein to be shared by all the optical systems for the laser beams P1 to Pn in consideration of easy adjustment of the mirror 35 and the protective glass 36. Nevertheless, these sharable mirror 35 and protective glass 36 may be replaced with sets of mirrors and protective glasses each provided for the laser beams P1 to Pn.

With a conventional configuration, a part of light is misdirected toward an outer side of the pipe 2, and the skirting portions of the laser beam hardly contribute to the heat input into the necessary area. With the above-described configuration of Embodiment 4, however, the misdirected part of light and the skirting portions of the laser beam can be used effectively by means of the trapezoidal prisms 32 to secure sufficient light intensity in the end portions, in the circumferential direction, of the irradiation area of the pipe 2. Adjusting the trapezoidal prisms 32 individually for the laser beams P1 to Pn can reduce the lowering of energy density in the skirting portions of each laser beam even when a smaller-diameter pipe is the target for the residual-stress improvement.

### Embodiment 5

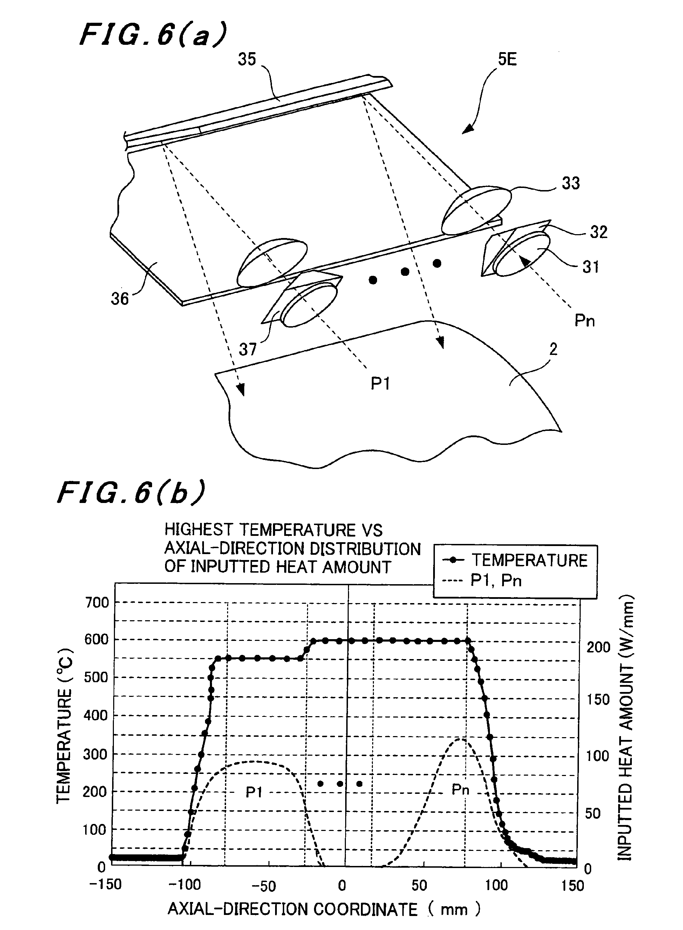

Fig. 6(a) is a schematic diagram illustrating an example of the configuration of the optical control unit 5 according to another embodiment. A description of this configuration will be given below. To make Fig. 6(a) more understandable, Fig. 6(a) also shows only the optical systems for the laser beams P1 and Pn of all the optical systems for the laser beams P1 to Pn. In addition, though each of the optical paths for the laser beams P1 and Pn is actually expanded and reflected by use of lenses and mirrors, Fig. 6(a) shows only principal optical paths.

Fig. 6(a) shows an optical control unit 5E which has a same configuration as that of the optical control unit 5D of Embodiment 4 shown in Fig. 5 except for the configuration of the optical system for the laser beam P1. For this reason, the descriptions of the optical control unit 5E will be given without the duplicate descriptions for the same members as those of the optical control unit 5D of Embodiment 4.

In Embodiment 5, a trapezoidal prism 37 is provided, instead of the trapezoidal prism 32, in the optical system for the laser beam P1 located on one of the both end sides. In short, the configuration of the optical control unit 5E includes the trapezoidal prism 37 that is placed somewhere in one of the optical systems, for example, at an early-stage side of that one optical system. The trapezoidal prism 37 differs from the trapezoidal prism 32 in that the trapezoidal prism 37 is placed with its trapezoidal side surfaces facing in the circumferential direction (i.e., extending in parallel to the axial direction). The trapezoidal prism 37 causes inward refraction of the optical path for the incident laser beam of the skirting portion in the axial direction so as to secure sufficient light intensity in the corresponding end portion, in the axial direction, of the irradiation area. Note that another identical trapezoidal prism 37 may be provided in the optical system for the laser beam Pn located on the other one of the both end sides.

The laser beam P1, for example, emitted from the optical fiber 6 enters the protective glass 31 that protects the optical system. The laser beam that has passed through the protective glass 11 is refracted by the trapezoidal prism 37 that adjusts the optical path for the laser beam of the skirting portion in the axial direction. The laser beam thus refracted by the trapezoidal prism 37 is enlarged by the lens 33. The laser beam thus enlarged by the lens 33 is reflected by the mirror 35 towards the pipe 2. The laser beam thus reflected by the mirror 35 passes through the protective glass 36 before a desired area of the pipe 2 is irradiated with the laser beam.

With a conventional configuration, the skirting portion of the laser beam hardly contributes to the heat input into the necessary area. With the above-described configuration of Embodiment 5, however, the skirting portion of the laser beam is refracted, and is used for the irradiation of the end portion, in the axial direction, of the irradiation area of the pipe 2. Accordingly, the irradiation of unnecessary areas can be reduced, and the reduction contributes to an effective use of the output. The light intensity in the end portion, in the circumferential direction, of the irradiation area of the pipe 2 is thus controlled so that a steep rise of the light intensity can be obtained.

With a conventional configuration, the skirting portion of the laser beam hardly contributes to the heat input into the necessary area. With the above-described configuration of Embodiment 5, however, the skirting portion of the laser beam can be used effectively by means of the trapezoidal prism 37 to secure sufficient light intensity in the end portion, in the axial direction, of the irradiation area of the pipe 2. Without the trapezoidal prism 37, the profile for the laser beam P1 shown in Fig. 6(b) would conventionally be, for example, one of ordinary Gaussian distribution, which is like the profile for the laser beam Pn. In contrast, the providing of the trapezoidal prism 37 enables the control to obtain a trapezoidal profile having rising end-side portions and a flat top portion. In addition, the distribution of the temperature in the pipe 2 can be controlled so as to obtain a temperature profile as shown in Fig. 6(b). Note that Fig. 6(b) also shows only the profiles for the laser beams P1 and Pn while the other profiles, such as one for the laser beam P2, are omitted.

### Embodiment 6

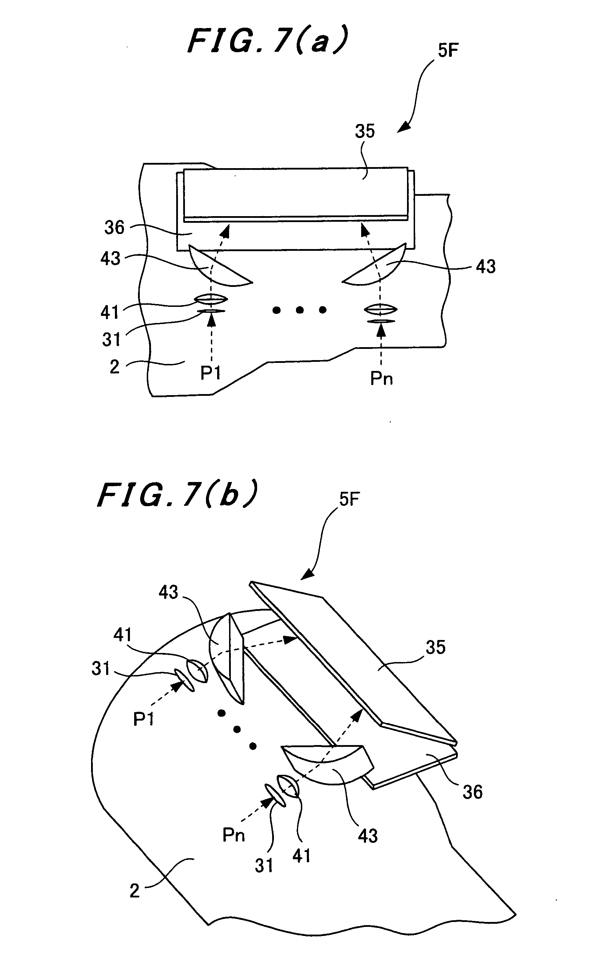

Figs. 7(a) and 7(b) are schematic diagrams each illustrating an example of the configuration of the optical control unit 5 according to another embodiment. A description of this configuration will be given below. Note that Fig. 7(a) is a top view while Fig. 7(b) is a perspective view. To make Figs. 7(a) and 7(b) more understandable, each of Figs. 7(a) and 7(b) also shows only the optical systems for the laser beams P1 and Pn of all the optical systems for the laser beams P1 to Pn. In addition, though each of the optical paths for the laser beams P1 and Pn is actually expanded and reflected by use of lenses and mirrors, each of Figs. 7(a) and 7(b) shows only principal optical paths.

Each of Figs. 7(a) and 7(b) shows an optical control unit 5F of Embodiment 6 which controls the laser beams P1 to Pn. In Embodiment 6, each of the optical systems for the laser beams other than for the laser beams P1 and Pn has an identical configuration to that of the optical system for each of the laser beams P1 and Pn in Embodiment 4 described above. The optical system for each of the laser beams other than for the laser beams P1 and Pn includes a protective glass 31, a trapezoidal prism 32, a lens 33, a mirror 35, and a protective glass 36. These members are arranged in this order along the direction in which the laser beam advances.

Note that the configurations of the optical systems for the laser beams P1 and Pn of Embodiment 6 differ from those of each of Embodiments 4 and 5. Specifically, each of the optical systems for the laser beams P1 and Pn of Embodiment 6 includes a protective glass 31, a lens 41, an optical-axis shifting lens 43, a mirror 35, and a protective glass 36. These members are arranged in this order along the direction in which the laser beam advances. Each optical-axis shifting lens 43 is placed in such a way that the corresponding one of the laser beams P1 and Pn enters with a shifted optical axis. Here, in each of the optical systems for the laser beams P1 and Pn, the optical-axis shifting lens 43 shifts the optical axis of the corresponding laser beam so that the position of the peak intensity of the laser beam on the irradiated surface can be shifted outwards in the axial direction. The shifting of the optical axis in turn shifts inwards the optical path of the laser beam of the skirting portion in the axial direction. Consequently, sufficient light intensity can be obtained in the end portions, in the axial direction, of the irradiation area.

Each of the laser beams P1 and Pn emitted from the optical fiber 6 enters the protective glass 31 that protects the optical system. The laser beam is then enlarged by the lens 41. The optical axis of the laser beam thus enlarged by the lens 41 is shifted by the optical-axis shifting lens 43 inwards in the axial direction. The laser beam with the optical axis thus shifted by the optical-axis shifting lens 43 is reflected by the mirror 35 towards the pipe 2. The laser beam thus reflected by the mirror 35 passes through the protective glass 36 before a desired area of the pipe 2 is irradiated with the laser beam.

With a conventional configuration, the skirting portions of the laser beams hardly contribute to the heat input into the necessary area. With the above-described configuration of Embodiment 6, however, the skirting portions of the laser beams are shifted inwards in the axial direction of the irradiation area on the surface of the pipe 2, and are used for the irradiation of the irradiation area. Accordingly, the irradiation of unnecessary areas can be reduced, and the reduction contributes to an effective use of the output. The light intensity in the end portions, in the axial direction, of the irradiation area of the pipe 2 is thus controlled so that a steep rise of the light intensity can be obtained.

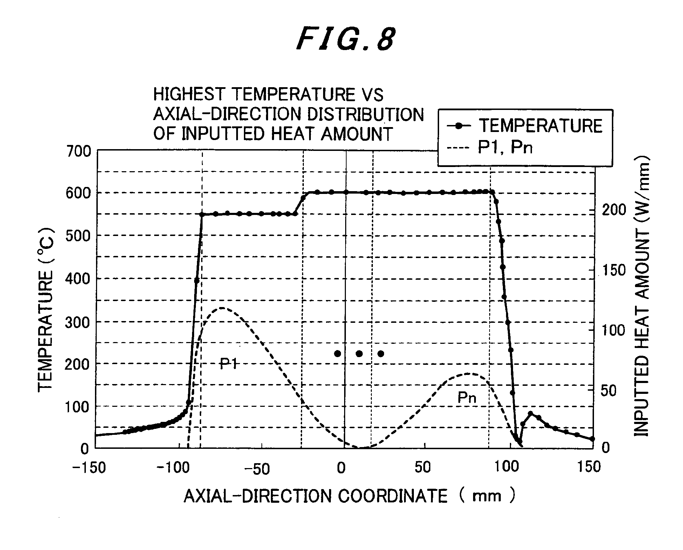

With a conventional configuration, the skirting portions of the laser beams hardly contribute to the heat input into the necessary area. With the above-described configuration of Embodiment 6, however, the skirting portions of the laser beams can be used effectively by means of the optical-axis shifting lenses 43 to secure sufficient light intensity in the end portions, in the axial direction, of the irradiation area of the pipe 2. Without the optical-axis shifting lenses 43, both of the profiles for the laser beams P1 and Pn shown in Fig. 8 would conventionally be, for example, ones of Gaussian distribution. The providing of the optical-axis shifting lenses 43 enables the peak positions in the axial direction to be shifted towards their respective end portions. What can be accomplished accordingly are asymmetric profiles each with a steeply-rising portion located on its end-portion side. Note that Fig. 8 also shows only the profiles for the laser beams P1 and Pn while the other profiles, such as one for the laser beam P2, are omitted.

### Embodiment 7

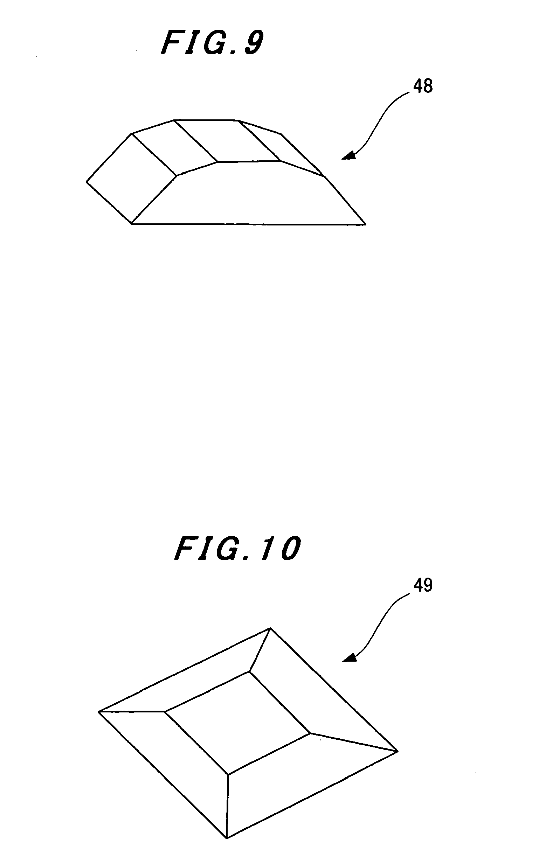

In each of Embodiments 4 to 6 described above, each of the trapezoidal prisms 32 and 37 is a prism having trapezoidal side-surfaces. In addition, each of the trapezoidal prisms 32 and 37 includes three surfaces on the light-outgoing side that face a single bottom surface on the light-incoming side. As a modified example of each of Embodiments 4 to 6, each of the trapezoidal prisms 32 and 37 may be replaced with a polyhedral prism 48 that has more than three surfaces on the light-outgoing side, such as one shown in Fig. 9. Note that the polyhedral prism shown in Fig. 9 has five surfaces that face the single bottom surface, but may be provided with more surfaces according to the desired heat-input profile. The heat-input adjustment that is made possible by use of such polyhedral prisms results in a smoother heat-input profile.

### Embodiment 8

In each of Embodiments 4 to 6 described above, each of the trapezoidal prisms 32 and 37 is a prism having trapezoidal side surfaces extending only in the circumferential direction or the axial direction. As a modified example of each of Embodiments 4 to 6, each of the trapezoidal prisms 32 and 37 may be replaced with a hexahedral prism 49 that has a shape of truncated quadrangular pyramid, such as one shown in Fig. 10. The hexahedral prism 49 has a trapezoidal section if taken along either the circumferential direction or the axial direction. The use of such hexahedral prisms makes it possible to simultaneously adjust the heat-input profile in the circumferential direction and the heat-input profile in the axial direction.

### Embodiment 9

In addition, in a conventional configuration, the laser beams P1 and Pn are independent of one another, and are placed respectively within casings that are provided independently of one another. As a modified example of each of Embodiments 4 to 6 described above, all the laser beams P1 and Pn may be placed within a single casing. The placing of all the laser beams P1 to Pn within a single casing makes it possible to secure a large amount of pitch adjustment for each of the optical systems for the laser beams P1 to Pn.

### Embodiment 10

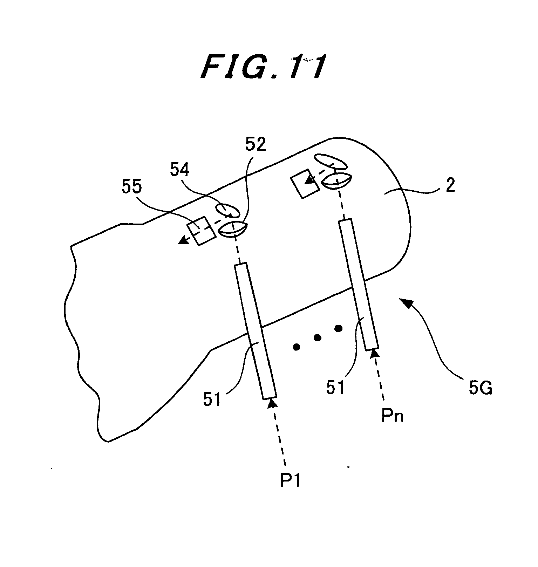

Fig. 11 is a schematic diagram illustrating an example of the configuration of the optical control unit 5 according to another embodiment. A description of this configuration will be given below. To make Fig. 11 more understandable, Fig. 11 also shows only the optical systems for the laser beams P1 and Pn of all the optical systems for the laser beams P1 to Pn. In addition, though each of the optical paths for the laser beams P1 and Pn is actually expanded and reflected by use of lenses and mirrors, Fig. 11 shows only principal optical paths.

Fig. 11 shows an optical control unit 5G of Embodiment 4 which also controls the laser beams P1 to Pn. The optical system, for example, for the laser beam P1 includes a light pipe 51, a lens 52, a mirror 54, and a lens 55. These members are arranged in this order along the direction in which the laser beam advances. In short, the configuration of the optical control unit 5G includes the light pipe 51 that is placed at an early-stage side of the optical system. Note that a spherical lens is employed as the lens 52.

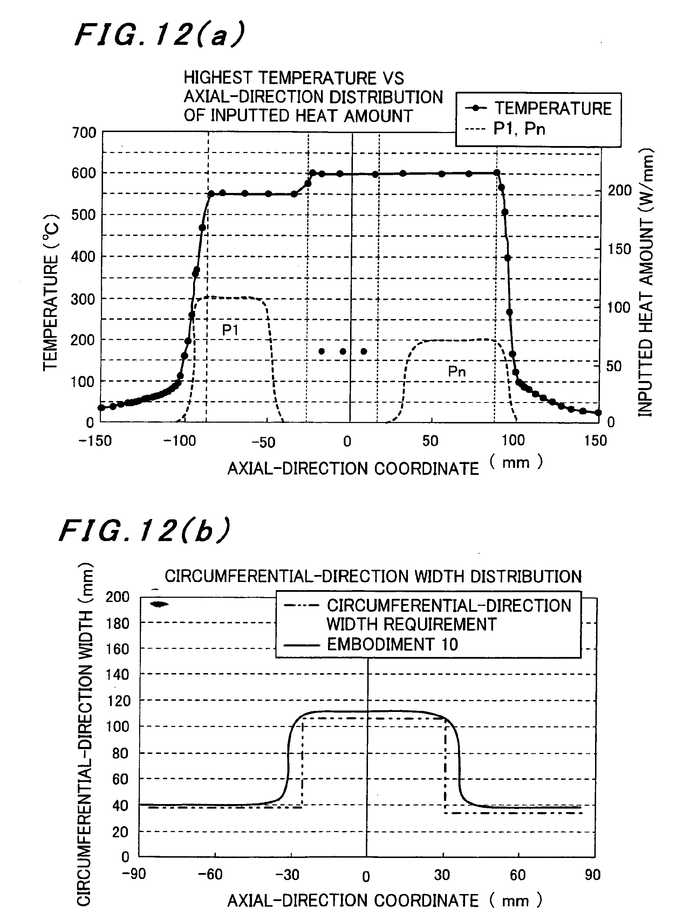

In Embodiment 10, the light pipes 51 are used instead of the mirrors used in Embodiments 1 to 3 or of the trapezoidal prisms used in Embodiments 4 to 6. Each light pipe 51 has either a rectangle cross-section or a square cross-section making the outgoing light have a uniform energy density, and giving a proper irradiation shape to the outgoing light. As seen from Fig. 12(a), the use of the light pipes 51 makes each of the profiles for the laser beams P1 and Pn have a trapezoidal shape with steeply-rising portions and a flat top portion. The use of the light pipes 51 that are capable of giving proper shapes to the profiles can prevent the light intensity in the end portions of the irradiation area from becoming insufficient. Note that Fig. 12(a) also shows only the profiles for the laser beams P1 and Pn while the other profiles, such as one for the laser beam P2, are omitted.

Each of the laser beams P1 to Pn, for example, emitted from the optical fiber 6 enters the light pipe 51 that makes the outgoing light have a uniform energy density, and gives a proper irradiation shape to the outgoing light. The laser beam which is made, by the light pipe 51, to have a uniform energy density and to have a proper irradiation shape is enlarged by the spherical lens 52. The laser beam thus enlarged by the spherical lens 52 is then reflected by the mirror 54 towards the pipe 2. The laser beam thus reflected by the mirror 54 is enlarged by the spherical lens 55 before a desired area of the pipe 2 is irradiated with the laser beam that forms an image projected onto the desired area. The use of the light pipe 51 allows the setting of only a smaller projection magnification of the optical system by means of the lens 52 and the like relative to the image formed at the end surface of the optical fiber 6. Consequently, aberration reduction can be achieved easily. In addition, a small-diameter lens can be used as each lens 52. Accordingly, the optical system can be formed by a combination of lenses each having a favorable manufacturability.

With such configuration, the profile of the irradiation area can be adjusted so that no irradiation takes place outside the necessary area. Consequently, the light intensity in the end portions, in the axial direction and in the circumferential direction, of the irradiation area of the pipe 2 are thus controlled so that steep rise of the light intensity can be obtained.

Accordingly, as Fig. 12(a) shows, for each of the laser beams P1 to Pn, the profile of the irradiation area can be adjusted so that a trapezoidal profile with steeply-rising portions can be formed on the end-portion sides. In addition, the distribution of the temperature in the pipe 2 can be controlled so as to obtain a temperature profile such as one shown in Fig. 12(a).

In addition, the profile, also in the circumferential direction, of the irradiation area can be adjusted by the light pipes 51 so that trapezoidal profiles with steeply-rising portions can be formed on the end-portion sides. In this way, sufficient light intensity can be secured in the end portions, in the circumferential direction, of the irradiation area of the pipe 2. Moreover, by adjusting the light pipes 51 for the laser beams P1 to Pn, the heat-input width in the circumferential direction can be controlled to have a step-like shape in the axial direction, such as one shown in Fig. 12(b). Such altering of the heat-input width is advantageous when the irradiation width in the circumferential direction has to be changed at a boundary between different materials, or the like.

### Embodiment 11

Each of the light pipes 51 of Embodiment 11 described above has either a rectangle sectional shape or a square sectional shape. As a modified example of Embodiment 11, the light pipe 51 with either a rectangle sectional shape or a square sectional shape may be replaced with a light pipe with, for example, a trapezoidal sectional shape, depending on the shape of the irradiation area. For example, if the irradiation-target pipe 2 has a tapered portion, the shape of the irradiation area for the tapered portion is preferably a trapezoid. Accordingly, the use of a light pipe with a trapezoidal sectional shape allows the tapered portion of the pipe 2 to be easily irradiated with a laser beam projected in the trapezoidal irradiation shape. By employing light pipes with sectional shapes that correspond to the shape of the irradiation area as described above, it is possible to perform irradiation in a suitable manner for the irradiation target. Note that, if the laser output has some rooms for an increase, a light pipe with either a circular cross-section or an elliptical cross-section may be used.

### Embodiment 12

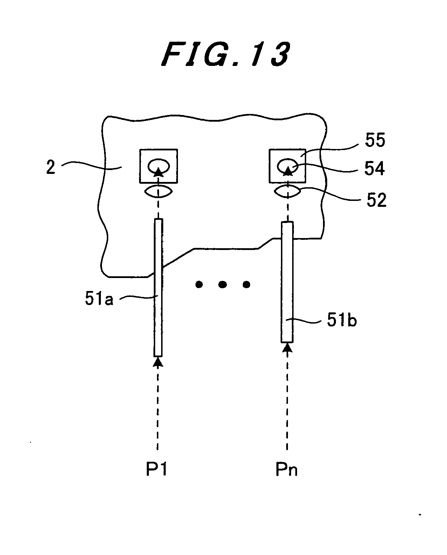

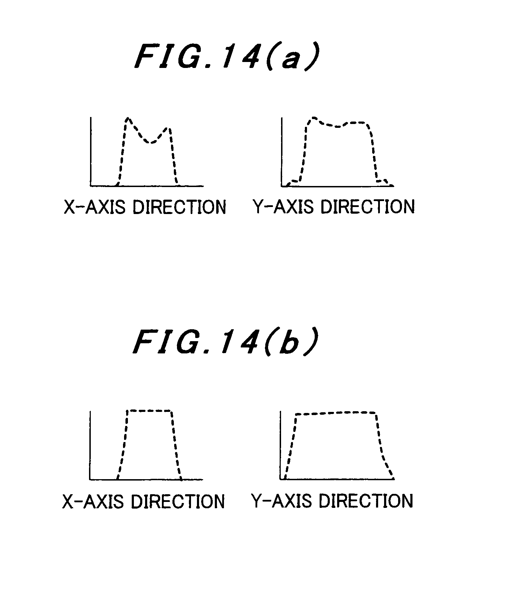

In Embodiment 11 described above, heat is inputted by using the light pipe 51, specifically, by projecting the cross-sectional shape of the light pipe 51 onto the irradiation-target pipe 2. To obtain a desired heat-input profile and a desired irradiation area, it is necessary to control not only the projected shape but also the uniformity of the projected image. Note that, the laser beams emitted from the laser oscillator 7, passing through the optical fibers 6, and reaching the light pipes 51 somehow differ from one another in the ways that the laser beams expand. All the ways that the laser beams P1 to Pn expand are not uniform. Accordingly, as Fig. 13 shows, light pipes 51a and 51b are designed to have lengths corresponding to the respective light sources (to the respective laser beams P1 to Pn). Thus, even if the profiles for the incident laser beams into their respective light pipes 51 change, the difference can be absorbed (see, for example, Fig. 14(b) to be described later. Accordingly, uniform irradiation with a desired irradiation shape can be achieved by making the lengths of the light pipes 51 differ from one another depending on the types of their respective light sources.

In addition, to absorb the characteristic differences between different light sources, the light pipes 51a and 51b may be elongated to have such a length that the characteristic differences between the different light sources can be absorbed. Moreover, the positions of the end surfaces of the optical fibers may be changed. Light pipes each with a variable length may be used to address the changing in the characteristics of the light sources. An example of the variable-length light pipe can be implemented, for example, by use of plural tubular copper casings each with mirror coating applied to the inside thereof, and by assembling these casings in a slidable manner. Elongating the light pipes as described above allows multiple times of light reflection inside each elongated light pipe, and thus energy density becomes uniform. Consequently, the difference in expanding characteristics among the laser beams can be cancelled.

For example, Fig. 14(a) shows a profile of a laser beam in the case of using a short light pipe. In this case, some light sources cannot produce finely rising shapes in the skirting portions of the irradiation area. In addition, a large concave shape can sometimes be observed in the top portion of the profile. In short, a desired profile cannot always be obtained. In contrast, with alight pipe elongated (for example, each light pipe is elongated to have a length that is approximately twice as long as the original one) in accordance with its light source, a substantially trapezoidal profile as shown in Fig. 14(b) can be obtained. Accordingly, even when the profile of the incident laser beam into the light pipe is varied, the variation can be absorbed by the elongating, to some degree, of the light pipe. Thus, a desired profile is obtainable.

### Embodiment 13

In Embodiments 1 to 12 described above, the lenses 12, 33, 52, and the like are spherical lenses. As a modified example of each of Embodiments 1 to 12, each of the lenses 12, 33, and 52 may be replaced with either an aspheric lens or a cylindrical lens. The use of aspheric lenses can reduce the number of lenses to be used in the optical control unit 5, and can simplify the configuration of the optical control unit 5 so that the optical control unit 5 can be used in a narrow space. The use of cylindrical lenses allows the control of the laser beams in the circumferential direction of the pipe 2 and the control of the laser beams in the axial direction of the pipe 2 to be independent of each other. With a reduced number of lenses achieved by the use of aspheric lens, the loss of the laser beams in the optical systems can also be reduced. Accordingly, the tolerance of the output of the device can be improved, and the cost of the device can be reduced. In each of Embodiments 1 to 10, if heat is inputted, for example, into a pipe with a variable diameter, an aspheric lens may be formed in such a way as to reduce a drastic change in the heat input caused by the shape difference at the boundary between the tapered portion and the straight portion. What can be obtained consequently is a smooth profile that fits well to the shape of the pipe. In each of Embodiments 11 and 12, the use of aspheric lenses makes it possible to obtain a desired irradiation shape to be projected. In addition, aberration can be corrected easily. Moreover, even when the dimensions of the irradiation area are changed, a profile with steeply-rising end portions of the irradiation area can be formed. Furthermore, the proportion of the irradiation intensity of the central portion of the irradiation area to the irradiation intensity of the skirting portions of the irradiation area can be adjusted to be a desired proportion.

### Industrial Applicability

The present invention is suitable for improvement in a residual stress in a cylindrical pipe.

## Claims

1. A tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes one pair or a plurality of pairs of mirrors, each pair of mirrors being disposed at a final stage of an optical system for the corresponding laser beam and disposed in such a way that the mirrors of the pair are placed respectively at both sides, in the circumferential direction of the tubular body, of a final optical path of the corresponding laser beam to the tubular body, and
the optical control unit makes the one pair or each of the plurality of pairs of mirrors reflect inwards a skirting portion, in the circumferential direction of the tubular body, of the corresponding laser beam so as to irradiate the tubular body with the laser beam thus reflected.

2. The tubular-body residual-stress improving apparatus according to claim 1 wherein, if the plurality of laser beams emitted from the laser light source are used for the irradiation, a pair of mirrors sharable by the plurality of laser beams are provided in place of the plurality of pairs of mirrors.

3. A tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes one pair of mirrors which are disposed at final stages of optical systems for the laser beams at both ends and disposed in such a way that the mirrors are placed respectively at both sides, in an axial direction of the tubular body, of final optical paths of the laser beams at both ends to the tubular body, and
the optical control unit makes the one pair of mirrors reflect inwards a skirting portion, in the axial direction of the tubular body, of the corresponding laser beam so as to irradiate the tubular body with the laser beam thus reflected.

4. The tubular-body residual-stress improving apparatus according to any one of claims 1 and 2, wherein
the optical control unit further includes one different pair of mirrors which are disposed at the final stages of the optical systems for the laser beams at both ends and disposed in such a way that the mirrors are placed respectively at both sides, in an axial direction of the tubular body, of final optical paths of the laser beams at both ends to the tubular body, and
the optical control unit makes the one different pair of mirrors reflect inwards a skirting portion, in the axial direction of the tubular body, of the corresponding laser beam so as to irradiate the tubular body with the laser beam thus reflected.

5. The tubular-body residual-stress improving apparatus according to claim 4 wherein, for the final optical path of each laser beam to the tubular body, the one pair of mirrors and the one different pair of mirrors are disposed to form a box shape that surrounds the final optical paths.

6. A tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a trapezoidal prism disposed in an optical system for each laser beam, the trapezoidal prism being placed with its trapezoidal side surfaces facing in an axial direction of the tubular body, and
the optical control unit makes the trapezoidal prism refract inwards a skirting portion, in the circumferential direction of the tubular body, of the corresponding laser beam so as to irradiate the tubular body with the laser beam thus refracted.

7. The tubular-body residual-stress improving apparatus according to claim 6, wherein
the optical control unit includes a different trapezoidal prism disposed in the optical system for the laser beam at at least one end, the different trapezoidal prism being placed with its trapezoidal sides surfaces facing in the circumferential direction of the tubular body, and
the optical control unit makes the different trapezoidal prism refract inwards a skirting portion, in the axial direction of the tubular body, of the laser beam at the one end so as to irradiate the tubular body with the laser beam thus refracted.

8. The tubular-body residual-stress improving apparatus according to any one of claims 6 and 7, wherein
the optical control unit includes a lens in the optical system for the laser beam at at least one end, the lens shifting an optical axis of the laser beam in the optical system, and
the optical control unit makes the lens shift the optical axis of the laser beam at the one end so as to shift a position of intensity peak of the laser beam at the one end towards an outer side in the axial direction of the tubular body, so that the tubular body is irradiated with the laser beam with the optical axis thus shifted.

9. The tubular-body residual-stress improving apparatus according to any one of claims 6 to 8, wherein a polyhedral prism having more than three surfaces on the light-outgoing side of the prism is provided in place of each of the aforementioned trapezoidal prisms and of the aforementioned different trapezoidal prisms.

10. The tubular-body residual-stress improving apparatus according to claim 7, wherein
a hexahedral prism that has a truncated quadrangular pyramid shape is provided in place of each different trapezoidal prism, and
the hexahedral prism refracts inwards the skirting portion, in the circumferential direction of the tubular body, of the laser beam at each end and refracts inwards the skirting portion, in the axial direction of the tubular body, of the laser beam at each end so as to irradiate the tubular body with the laser beam thus refracted.

11. A tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a different trapezoidal prism disposed in an optical system for the laser beam at at least one end, the different trapezoidal prism being placed with its trapezoidal side surfaces facing in the circumferential direction of the tubular body, and
the optical control unit makes the different trapezoidal prism refract inwards a skirting portion, in an axial direction of the tubular body, of the laser beam at the one end so as to irradiate the tubular body with the laser beam thus refracted.

12. A tubular-body residual-stress improving apparatus comprising:
rotationally driving means that moves circling around an outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a lens in an optical system for the laser beam at at least one end, the lens shifting an optical axis of the laser beam, and
the optical control unit makes the lens shift the optical axis of the laser beam at the one end so as to shift the position of intensity peak of the laser beam at the one end towards an outer side in an axial direction of the tubular body, so that the tubular body is irradiated with the laser beam with the optical axis thus shifted.

13. The tubular-body residual-stress improving apparatus according to any one of claims 6 to 12, wherein the optical system of the laser beam is arranged inside a single casing.

14. A tubular-body residual-stress improving apparatus comprising:
rotationally driving means that moves circling around and outer circumference of a cylindrical tubular body; and
an optical control unit that is held by the rotationally driving means, the optical control unit making an outer-circumferential surface of a welded portion of the tubular body be irradiated with one or a plurality of laser beams emitted from a laser light source, the optical control unit being capable of adjusting an area irradiated with and the one or the plurality of laser beams, the tubular-body residual-stress improving apparatus improving a residual stress of the tubular body by moving, in a circumferential direction of the tubular body, the area irradiated with the one or the plurality of laser beams, wherein
the optical control unit includes a light pipe at an early stage of an optical system for each laser beam, the light pipe having a rectangular cross section or a square cross section, and
the optical control unit makes the light pipe form the laser beam into a rectangular irradiation shape or a square irradiation shape, and irradiates the tubular body with the laser beam thus formed into the shape.

15. The tubular-body residual-stress improving apparatus according to claim 14, wherein the light pipe with the rectangular cross section or the square cross section is replaced with a light pipe with a trapezoidal cross section.

16. The tubular-body residual-stress improving apparatus according to claim 14, wherein the light pipe with the rectangular cross section or the square cross section is replaced with a light pipe with a circular cross section or an elliptical cross section.

17. The tubular-body residual-stress improving apparatus according to any one of claims 14 to 16, wherein the length of each light pipe is changed in accordance with the optical system thereof.

18. The tubular-body residual-stress improving apparatus according to any one of claims 14 to 16, wherein a variable-length light pipe is provided as each of the light pipes, the variable-length light pipe being capable of changing its length in accordance with the optical system thereof.

19. The tubular-body residual-stress improving apparatus according to any one of claims 14 to 18, wherein each light pipe has such a length that a change in a characteristic of an incoming laser beam causes no change in a characteristic of the outgoing laser beam.

20. The tubular-body residual-stress improving apparatus according to any one of claims 1 to 19, wherein an aspheric lens is provided in the optical system of the optical control unit.
